# EUROPÄISCHE PATENTSCHRIFT

(11) **EP 1 135 775 B1**
(45) Veröffentlichungstag und Bekanntmachung des Hinweises auf die Patenterteilung: **26.02.2003**
(21) Anmeldenummer: 99958026.9
(22) Anmeldetag: 12.11.1999
(51) Int. Cl.: G11B 33/04

(54) **VORRICHTUNG ZUR SPEICHERUNG SCHEIBENFÖRMIGER DATENTRÄGER**
DEVICE FOR STORING DISC-SHAPED DATA CARRIERS
DISPOSITIF POUR STOCKER DES SUPPORTS DE DONNEES SOUS FORME DE DISQUES

(30) Priorität: 13.11.1998 DE 19852419
(43) Veröffentlichungstag der Anmeldung: 26.09.2001
(73) Patentinhaber: Variopac Swiss GmbH, 9424 Rheineck (DE)
(72) Erfinder: Diestelhorst, Heinz-Ulrich, 32257 Bünde (DE); Gloger, Klaus, W.,J., CAIRNS QLD 4870 (AU)
(74) Vertreter: Manitz, Finsterwald & Partner GbR
(86) Internationale Anmeldenummer: EP9908715
(87) Internationale Veröffentlichungsnummer: WO00030115

(56) Entgegenhaltungen:
- WO-A-95/05661
- DE-U- 29 718 027
- US-A- 5 201 414
- US-A- 5 501 326
- US-A- 5 586 650
- US-A- 5 590 770
- US-A- 5 593 031
- US-A- 5 706 938

## Beschreibung

Die Erfindung betrifft eine Vorrichtung zur Speicherung scheibenförmiger Datenträger, insbesondere vom CD- oder DVD-Typ.

Derartige Speichervorrichtungen sind grundsätzlich bekannt und dienen dazu, Datenträger beispielsweise in Form von Compact-Discs aufzubewahren bzw. zu transportieren oder für den Verleih oder Verkauf zu präsentieren.

US 5,593,031 beschreibt eine Vorrichtung zur Aufbewahrung von optischen Speicherscheiben mit einem bewegbaren Scheibenhalter, der relativ zu einem aufklappbaren Gehäuse bewegbar und im normalen Aufbewahrungszustand vollständig in dem geschlossenen Gehäuse angeordnet ist.

Es ist das der Erfindung zugrundeliegende Problem (Aufgabe), eine Speichervorrichtung der eingangs genannten Art zu schaffen, die bei einfacher Handhabung möglichst vielseitig verwendbar ist.

Die Lösung dieser Aufgabe erfolgt durch die Merkmale der Ansprüche 1 und 16.

Das erfindungsgemäß vorgesehene Koppelorgan, das im folgenden auch als Clip bezeichnet wird, eröffnet die Möglichkeit, einen im Aufnahmeraum des Flachgehäuses angeordneten Datenträger über den Außenabschnitt des Koppelorgans an grundsätzlich beliebig gestaltete Trägereinheiten zu koppeln.

Erfindungsgemäß ist ein Flachgehäuse vorgesehen, das eine Schlitzöffnung aufweist, über die ein Aufnahmeraum für den Datenträger zugänglich ist, wobei das Koppelorgan über die Schlitzöffnung in das Flachgehäuse einsteckbar und im eingesteckten Zustand mit dem Flachgehäuse lösbar verbunden, insbesondere verrastet ist.

In einem derartigen Flachgehäuse kann der Datenträger vor äußeren Einflüssen geschützt aufbewahrt werden. Das Koppelorgan eröffnet die Möglichkeit, das Flachgehäuse nicht nur an Trägereinheiten zu koppeln, sonder gleichzeitig auch die Schlitzöffnung des Flachgehäuses zu verkleinern bzw. vollständig zu verschließen. Der Clip erfüllt somit zwei Funktionen gleichzeitig, indem er einerseits eine einfache Fixiermöglichkeit für das Flachgehäuse schafft und andererseits einen besseren Schutz des Datenträgers vor äußeren Einflüssen, beispielsweise vor durch die Schlitzöffnung in den Aufnahmeraum eindringendem Staub und vor Feuchtigkeit, bietet. Darüber hinaus eröffnet diese Ausführungsform der Erfindung vielfältige Möglichkeiten zur Handhabung sowohl einzelner als auch einer Mehrzahl von Datenträger-Flachgehäusen gleichzeitig. Beispielsweise wird die Handhabung einer Vielzahl von jeweils mit einem Clip gekoppelten Flachgehäusen und somit die gleichzeitige Speicherung zahlreicher Datenträger erheblich vereinfacht, da die Flachgehäuse in übersichtlicher und geordneter Weise an Trägereinheiten zusammengefaßt und dabei einzeln über das jeweilige Koppelorgan mit der Trägereinheit verbunden werden können. Die Flachgehäuse können somit unabhängig voneinander ausgewechselt werden, ohne dabei die Gesamtanordnung zu stören.

Gemäß einer bevorzugten Ausführungsform der Erfindung umfaßt das Koppelorgan einen mit einer etwa teilkreisförmigen Aussparung versehenen Steckabschnitt, der im eingesteckten Zustand den Raum im Flachgehäuse zwischen der Schlitzöffnung und dem kreisförmigen Aufnahmeraum für den Datenträger zumindest teilweise, bevorzugt im wesentlichen vollständig ausfüllt.

Der im Flachgehäuse zur Verfügung stehende Raum wird hierdurch in optimaler Weise durch das erfindungsgemäße Koppelorgan genutzt. Durch das Vorsehen der teilkreisförmigen Aussparung im Steckabschnitt des Koppelorgans, die an den Umriß des jeweiligen Datenträgers angepaßt werden kann, kann dem Datenträger im Flachgehäuse zusätzlicher Halt verliehen werden.

Gemäß einem weiteren bevorzugten Ausführungsbeispiel der Erfindung ist wenigstens eine der an die Schlitzöffnung angrenzenden Schmalseiten des Flachgehäuses mit vorsprungartigen Rastmitteln für das Koppelorgan versehen.

Die dadurch geschaffene Möglichkeit, das Koppelorgan mit dem Flachgehäuse zu verrasten, führt zu einer besonders schnell und einfach herzustellenden und aufzuhebenden mechanischen Verbindung zwischen dem Clip und dem Flachgehäuse.

Wenn gemäß einem weiteren bevorzugten Ausführungsbeispiel der Erfindung wenigstens ein zwei Halbschalen des Flachgehäuses miteinander verbindendes Verbindungselement als Rastmittel ausgebildet ist, wird durch diese Doppelnutzung des Verbindungselementes die Zahl der am Flachgehäuse auszubildenden Merkmale minimiert und somit die Herstellung des Flachgehäuses vereinfacht.

Gemäß einer weiteren bevorzugten Ausführungsform der Erfindung weist der bei eingestecktem Koppelorgan außerhalb des Flachgehäuses angeordnete Außenabschnitt des Koppelorgans wenigstens ein Koppelelement auf, über welches das Koppelorgan mit Trägern insbesondere in Form von Klapphüllen, Außenverpackungen, Gestängeanordnungen, Hängeregistraturen, Speicherracks, Displayeinheiten, Aufbewahrungsvorrichtungen, Schienensystemen und/oder Stecksystemen insbesondere lösbar verbindbar ist.

Hierdurch kann eine Vielzahl von Flachgehäusen in geordneter und übersichtlicher Weise an einem für den jeweiligen Zweck optimal ausgebildeten Träger befestigt werden. Der erfindungsgemäße, einfach und kostengünstig herstellbare Clip dient dabei jeweils als ein Adapterstück für die Flachgehäuse, die somit keiner baulichen Veränderung unterworfen werden müssen, um mit den verschiedenen Trägern kombiniert werden zu können. Des weiteren können mehrere Träger nach Art eines Baukastensystems zu grundsätzlich beliebig gestalteten Trägerkonstruktionen z. B. zum Aufbewahren, Verleihen, Verkaufen und/oder Präsentieren von CDs oder DVDs zusammengesetzt werden, wobei das erfindungsgemäße Koppelorgan jeweils eine individuelle Anordnung des Flachgehäuses ermöglicht.

Gemäß einer weiteren bevorzugten Ausführungsform der Erfindung ist das Koppelorgan Bestandteil einer insbesondere aus Karton oder Pappe bestehenden Faltverpackung.

Hierdurch wird eine besonders einfache Möglichkeit zum Versenden von Datenträgern geschaffen. Das den Datenträger enthaltende Flachgehäuse und die Faltverpackung werden hierzu einfach zu einer versandfertigen Einheit zusammengesteckt.

Weitere bevorzugte Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1 und 2: Ausführungsformen einer erfindungsgemäßen Speichervorrichtung mit einem an Gestängeanordnungen koppelbaren Koppelorgan,
- Fig. 3 - 6: Ausführungsformen einer erfindungsgemäßen Speichervorrichtung zur Verbindung mit DVD-Boxen, und
- Fig. 7 und 8: Ausführungsformen einer erfindungsgemäßen Speichervorrichtung mit einem an ein Schienensystem koppelbaren Koppelorgan.

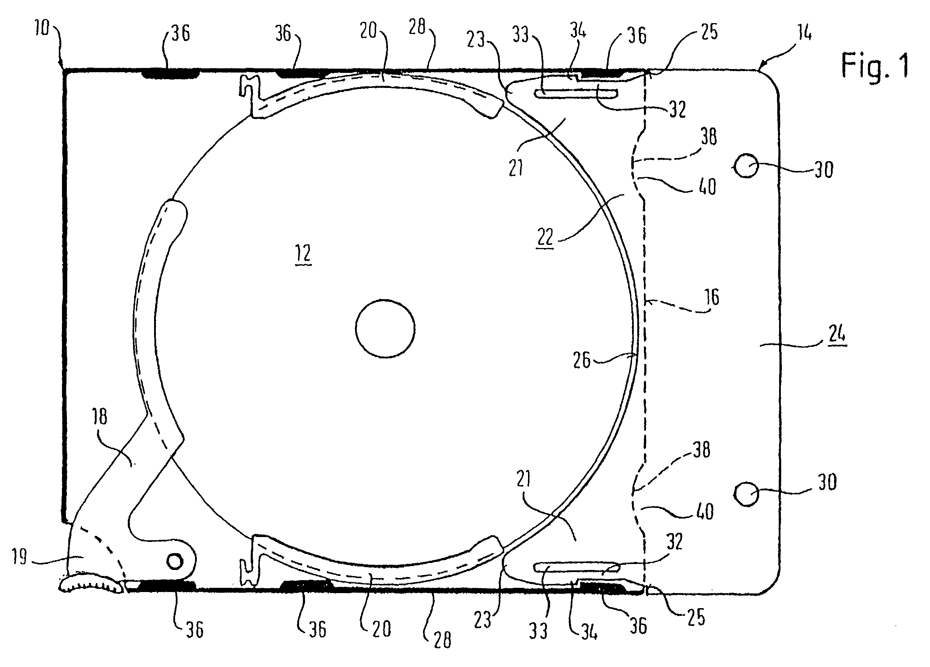

Die in Fig. 1 dargestellte erfindungsgemäße Speichervorrichtung umfaßt ein Flachgehäuse 10, in dem ein scheibenförmiger Datenträger 12, z. B. eine CD oder DVD, aufgenommen ist, sowie ein Koppelorgan 14, das durch eine Schlitzöffnung 16 in das Flachgehäuse 10 gesteckt ist.

Das Flachgehäuse 10 ist Bestandteil einer Speichervorrichtung für Datenträger, die beispielsweise in der deutschen Patentanmeldung 197 28 705 (Anmeldetag: 04.07.1997) oder in der internationalen Patentanmeldung WO 93/16471 (veröffentlicht am 19.08.1993) beschrieben ist. Das aus lichtdurchlässigem und insbesondere eingefärbtem Material bestehende Kunststoff-Flachgehäuse 10 weist einen Auswurfmechanismus für den Datenträger 12 auf, der einen Betätigungshebel 18 sowie zwei Schwenkhebel 20 umfaßt. Der Datenträger 12 wird von den Schwenkhebeln 20 in dem Flachgehäuse 10 gehalten, während er - bei abgenommenem Koppelorgan 14 - mittels des Betätigungshebels 18, der einen aus dem Flachgehäuse 10 herausragenden Betätigungsabschnitt 19 aufweist, gegen die Haltekraft der Schwenkhebel 20 durch die Schlitzöffnung 16 hindurch ausgeworfen werden kann.

Das Koppelorgan 14 umfaßt einen Steckabschnitt 22, der im eingesteckten Zustand gemäß Fig. 1 im Flachgehäuse 10 angeordnet ist, sowie einen im eingesteckten Zustand außerhalb des Flachgehäuses 10 befindlichen Außenabschnitt 24.

Der Steckabschnitt 22 ist mit einer teilkreisförmigen Aussparung 26 versehen, die an den Umriß des kreisförmigen Datenträgers 12 angepaßt ist. Der Raum zwischen dem Datenträger 12 bzw. einem kreisförmigen Aufnahmeraum für den Datenträger 12, der Schlitzöffnung 16 und den an die Schlitzöffnung 16 angrenzenden Schmalseiten 28 des Flachgehäuses 10 wird von Rastbereichen 21 des Steckabschnitts 22 im wesentlichen vollständig ausgefüllt. Die Dicke des Steckabschnitts 22 entspricht vorzugsweise etwa der Höhe des im Flachgehäuse 10 zur Verfügung stehenden Raumes.

Jeder Rastbereich 21 des Steckabschnitts 22 weist eine langlochförmige Aussparung 33 auf, die im eingesteckten Zustand parallel zur jeweiligen Schmalseite 28 verläuft. Auf der im eingesteckten Zustand der jeweiligen Schmalseite 28 zugewandten Seite sind die Aussparungen 33 jeweils durch einen Materialsteg 32 begrenzt, der mit einem Eingriffsabschnitt 34 versehen ist.

Mit von den Schmalseiten 28 nach innen abstehenden Verbindungselementen 36 steht der Steckabschnitt 22 des Koppelorgans 14 im eingesteckten Zustand derart in Eingriff, daß die Eingriffsabschnitte 34 die Verbindungselemente 36 verriegelnd hintergreifen.

In Fig. 1 sind weiter von der Schlitzöffnung 16 entfernte, nicht zum Zusammenwirken mit dem Koppelorgan 14 bestimmte Verbindungselemente 36 zu erkennen. Die Verbindungselemente 36 sorgen für eine lösbare Rast- oder Steckverbindung zwischen zwei das Flachgehäuse 10 bildenden Halbschalen und sind jeweils an einer der beiden Halbschalen des Flachgehäuses 10 angeformt oder zweiteilig mit zwei jeweils an einer der Halbschalen angeformten Einzelelementen ausgebildet.

Die mit dem Koppelorgan 14 zusammenwirkenden Verbindungselemente 36 dienen somit sowohl als Rastmittel des Flachgehäuses 10 zur Verbindung mit dem Koppelorgan 14 als auch zum Zusammenhalt der beiden Halbschalen des Flachgehäuses 10.

Wenigstens eine der Halbschalen des Flachgehäuses 10 ist an ihrem die Schlitzöffnung 16 begrenzenden Rand mit zwei teilkreisförmigen Einbuchtungen 38 versehen, in denen im eingesteckten Zustand am Außenabschnitt 24 des Koppelorgans 14 angeordnete und komplementär zu den Einbuchtungen 38 geformte Fixierungsnasen 40 sitzen, die für eine definierte Relativlage zwischen dem Koppelorgan 14 und dem Flachgehäuse 10 sorgen.

Anschlagschultern 25 des Außenabschnitts 24 bestimmen die maximale Einstecktiefe des Steckabschnitts 22 im Flachgehäuse 10.

Der Außenabschnitt 24 des Koppelorgans 14 kann eine größere Dicke als der Steckabschnitt 22 aufweisen und mit wenigstens einer Stoßkante versehen sein, die im eingesteckten Zustand gemäß Fig. 1 an einem der die Schlitzöffnung 16 begrenzenden Ränder des Flachgehäuses 10 anliegt. Das Flachgehäuse 10 kann des weiteren mit Brems- und Führungsleisten versehen sein, die einander gegenüberliegen und sich benachbart der Schlitzöffnung 16 über die Breite der Schlitzöffnung 16 erstrecken, wodurch sie im Inneren des Flachgehäuses 10 für den Datenträger 12 und den Steckabschnitt 22 einen gegenüber der Schlitzöffnung 16 verengten Durchgang bilden. In diesem Fall kann der Steckabschnitt 22 mit zumindest einer im eingesteckten Zustand an den Brems- und Führungsleisten anliegenden Stoßkante versehen sein.

In der Ausführungsform gemäß Fig. 1 ist der Außenabschnitt 24 des Koppelorgans 14 als rechteckiger Heftstreifen ausgebildet, dessen Breite derart gewählt ist, daß er bündig mit den Außenflächen der Schmalseiten 28 des Flachgehäuses 10 abschließt. An seiner von der Schlitzöffnung 16 entfernten Seite ist der Außenabschnitt 24 mit zwei kreisförmigen und jeweils als Koppelelement 30 dienenden Durchbrüchen versehen, deren Abstand entsprechend gängigen, insbesondere genormten Gestängeanordnungen beispielsweise von Leitz-Ordnern oder dergleichen gewählt ist.

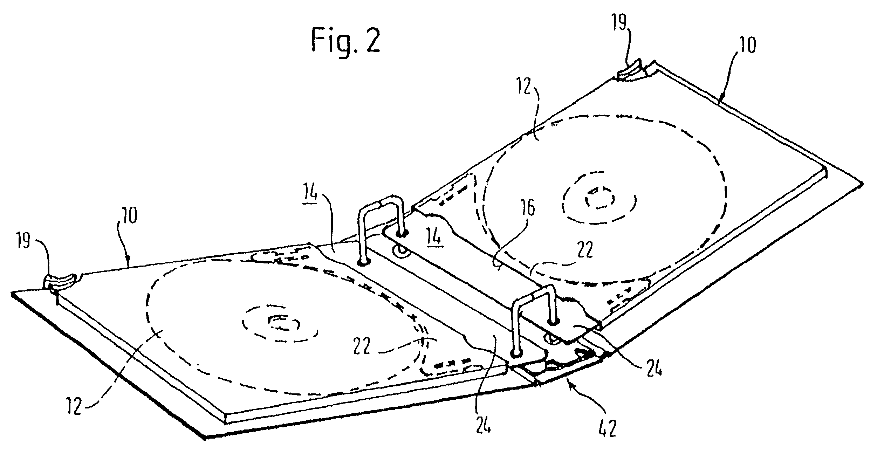

Fig. 2 zeigt, wie mehrere der erfindungsgemäßen Speichervorrichtungen in einem derartigen, nach Art eines Buches oder Ordners ausgebildeten Träger 42 zur Speicherung einer Vielzahl von scheibenformigen Datenträgern 12 angeordnet werden können.

Das Koppelorgan 14 ist aus einem wiederverwertbaren Material hergestellt, beispielsweise aus einen recyclingfähigen Kunststoff wie Polypropylen oder aus einem Karton- oder Pappmaterial. Des weiteren kann das Koppelorgan 14 insbesondere an seinem Außenabschnitt 24 mit einem Chip oder einem anderen Informationsträger versehen sein, in den beispielsweise den Inhalt des jeweiligen Datenträgers 12 betreffende Informationen einspeicherbar sind. Dieser Chip oder Informationsträger kann fernauslesbar ausgestaltet sein, so daß die jeweiligen Informationen durch Vorbeibewegen an einer Lesestation an eine Auswerte- und/oder Anzeigevorrichtung übermittelt werden können.

Zur Herstellung der Rastverbindung zwischen dem Koppelorgan 14 und dem Flachgehäuse 10 wird der Steckabschnitt 22 durch die Schlitzöffnung 16 mit parallel zu den Schmalseiten 28 ausgerichteten Materialstegen 32 eingeführt. Dabei sorgen die abgerundeten freien Enden 23 der Rastbereiche 21 für eine sichere Führung des Steckabschnitts 22. Durch die die Rastmittel des Flachgehäuses 10 darstellenden Verbindungselemente 36 werden die Materialstege 32 beim Einstecken des Steckabschnitts 22 in das Flachgehäuse 10 elastisch verformt, so daß die Eingriffsabschnitte 34 an den Verbindungselementen 36 vorbeibewegt werden können. Wenn die vorgegebene Einstecktiefe erreicht ist, springen die Eingriffsabschnitte 34 zurück, wobei sie die Verbindungselemente 36 verriegelnd hintergreifen und somit das Koppelorgan 14 im Flachgehäuse 10 eingerastet ist.

Zum Lösen der Rastverbindung werden die Materialstege 32 entweder von außen über die Schmalseiten 28 des Flachgehäuses 10 oder mittels eines speziellen Werkzeugs, das zusätzlich zu dem eingesteckten Koppelorgan 14 in das Flachgehäuse 10 - beispielsweise über in Fig. 1 nicht dargestellte, in den Gehäuseschmalseiten 28 ausgebildete Durchbrüche - einbringbar ist, beaufschlagt und unter elastischer Verformung in die Aussparungen 33 gedrückt, um die Verriegelung mit den Verbindungselementen 36 zu lösen und das Koppelorgan 14 aus dem Flachgehäuse 10 herausziehen zu können.

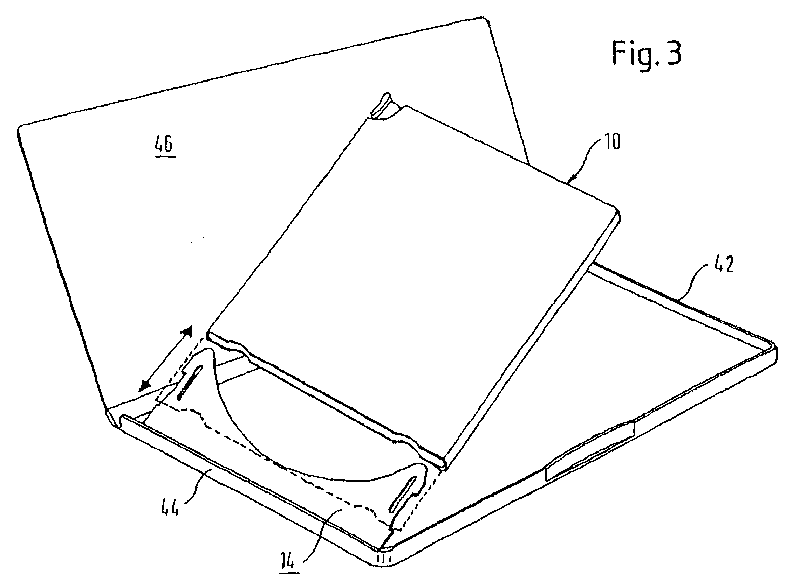

Die Fig. 3 bis 6 zeigen die erfindungsgemäße Speichervorrichtung in Verbindung mit als DVD-Boxen 42 ausgebildeten Trägern, in denen scheibenförmige Datenträger vom DVD-Typ, die einen größeren Durchmesser als herkömmliche Compact-Discs aufweisen, aufbewahrt werden. Die Boxen 42 können grundsätzlich aber auch für andere Datenträger verwendet werden, die jeweils in einem mit einem Koppelorgan 14 verbindbaren Flachgehäuse 10 angeordnet sind. Vorzugsweise sind die DVD-Boxen 42 einstückig ausgebildet, wobei sie im Spritzgußverfahren hergestellt werden und aus einem durchsichtigen Material, vorzugsweise aus Kunststoff und bevorzugt aus Polypropylen, bestehen.

In der Ausführungsform gemäß Fig. 3 kann das Koppelorgan 14 derart mit der DVD-Box 42 verbunden sein, daß es in die Stellung gemäß Fig. 3 vorgespannt ist. Dadurch kann bei aufgeschwenktem Deckel 46 das Flachgehäuse 10 bequem auf das Koppelorgan 14 gesteckt bzw. vom Koppelorgan 14 gelöst werden, wie es durch den Doppelpfeil angedeutet ist.

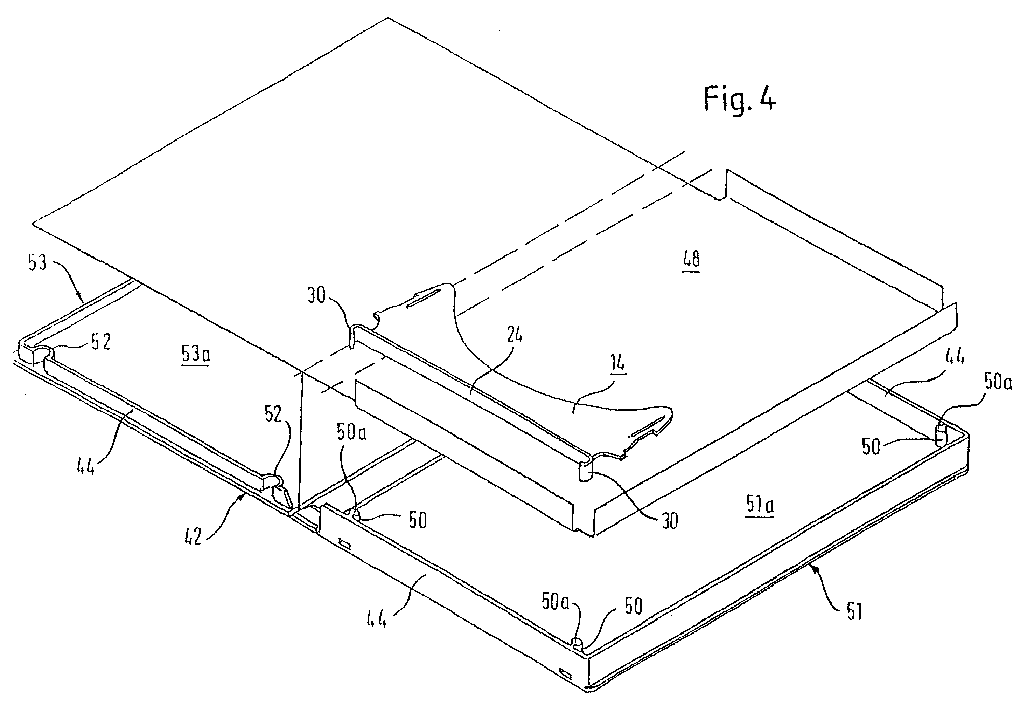

Während gemäß Fig. 3 das Koppelorgan 14 einstückig mit einer Schmalseite 44 der schatullenartigen DVD-Box 42 ausgebildet und insbesondere über einen als Filmscharnier ausgebildeten Bereich reduzierter Materialstärke verschwenkbar verbunden ist, ist in den Ausführungsformen gemäß den Fig. 4 bis 6 das Koppelorgan 14 mittels im folgenden näher beschriebener Koppelelemente 30 lösbar in der jeweiligen DVD-Box 42 fixierbar.

In Fig. 4 ist eine einteilig und aus transparentem Kunststoff hergestellte DVD-Box 42 dargestellt, in die eine Informationsbeilage 48, beispielsweise ein Booklet oder eine Broschüre, einlegbar ist. Die Informationsbeilage 48 wird zur Fixierung in der DVD-Box 42 unter Fixierelemente 50, 52 geschoben, die an Schmalseiten 44 von Flachseiten 51a, 53a einer Aufnahmehälfte 51 bzw. einer Deckelhälfte 53 zur Bildung schlitzartiger Einsteckaussparungen von der jeweiligen Flachseite 51a, 53a beabstandet sind.

Die jeweils in einem Eckbereich der Aufnahmehälfte 51 angeordneten Fixierelemente 50 dienen zur Lagefixierung des Koppelorgans 14 in der Aufnahmehälfte 51, wobei der Außenabschnitt 24 des Koppelorgans 14 mit hakenartig gebogenen Koppelelementen 30 versehen ist. Im in der DVD-Box 42 fixierten Zustand umgreifen die Koppelelemente 30 zylindrische Vorsprünge 50a der Fixierelemente 50, so daß das Koppelorgan 14 und ein mit dem Koppelorgan 14 verbundenes, nicht dargestelltes Flachgehäuse 10 lediglich in einer Richtung senkrecht zur Flachseite 51a in die DVD-Box 42 eingelegt und aus der DVD-Box 42 entnommen werden kann.

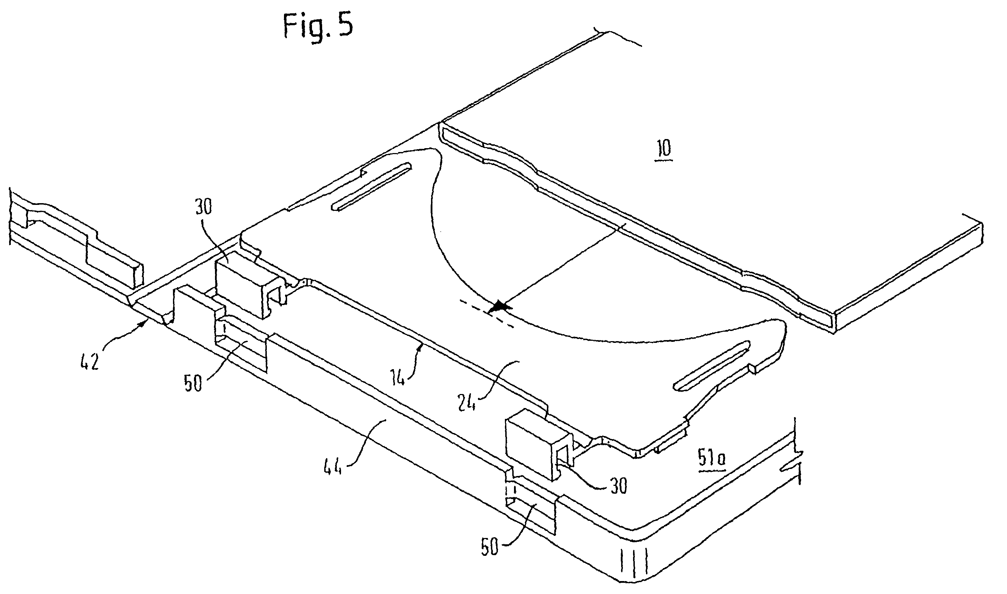

In Fig. 5 ist eine Ausführungsform der erfindungsgemäßen Speichervorrichtung dargestellt, deren Koppelorgan 14 an seinem Außenabschnitt 24 zwei nach Art von Greifelementen ausgebildete Koppelelemente 30 aufweist, die mit an der Schmalseite 44 der DVD-Box 42 ausgebildeten, parallel zur Schmalseite 44 verlaufenden und nach innen versetzten stegartigen Fixierelementen 50 in Eingriff bringbar sind. Auch in dieser Ausführungsform kann das Koppelorgan 14 bzw. das Flachgehäuse 10 lediglich in einer senkrecht zur Flachseite 51a der DVD-Box 42 verlaufenden Richtung entnommen und eingelegt werden.

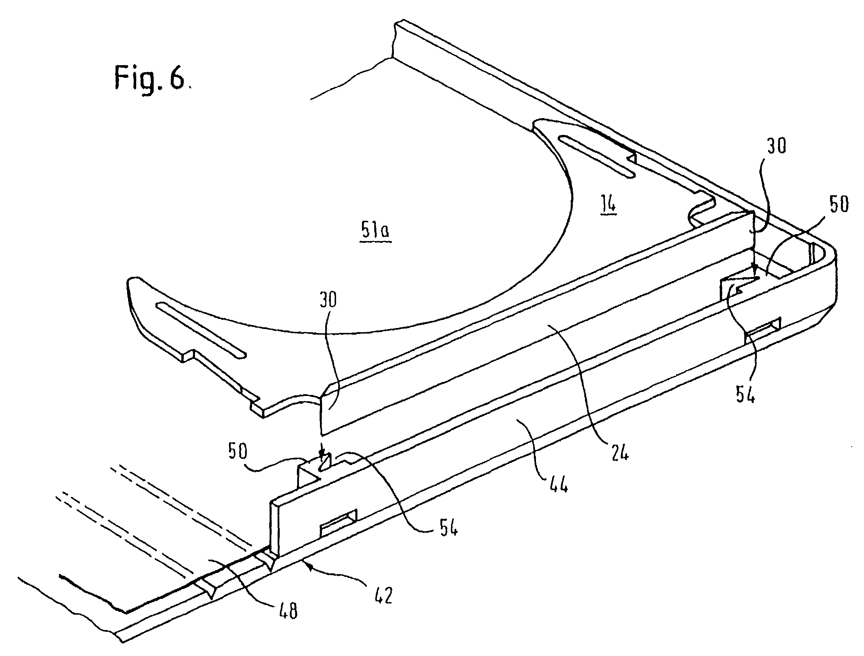

In Fig. 6 ist eine weitere Ausführungsform eines Koppelorgans 14 einer erfindungsgemäßen Speichervorrichtung dargestellt, das an einer mit einer Informationsbeilage 48, die in Einsteckschlitze zwischen der Flachseite 51a und Koppelelemente 30 des Koppelorgans 14 gesteckt ist, versehenen DVD-Box 42 fixierbar ist. Hierzu sind die an der Innenseite einer Schmalseite 44 angeordneten Fixierelemente 50 vorgesehen, die auf einander zugewandten Seiten mit keilförmigen Ausnehmungen 54 versehen sind. In diese Ausnehmungen 54 passen komplementäre, als Koppelelemente 30 des Koppelorgans 14 dienende freie Enden eines Streifenabschnitts des Außenabschnitts 24, die jeweils entsprechend der Form der Ausnehmungen 54 abgeschrägt sind. Auch in dieser Ausführungsform kann das Koppelorgan 14 lediglich senkrecht zur Flachseite 51a der DVD-Box 42 entnommen und eingelegt werden.

Die vorstehend anhand der Fig. 3 bis 6 beschriebenen Möglichkeiten zur Fixierung des Koppelorgans 14 in einem z. B. als DVD-Box ausgebildeten Träger 42 stellen bevorzugte Beispiele für eine grundsätzlich in beliebiger Weise ausführbare Verbindung zwischen der erfindungsgemäßen Speichervorrichtung und einem Träger 42 zur Lagefixierung eines Flachgehäuses mittels des Koppelorgans 14 dar.

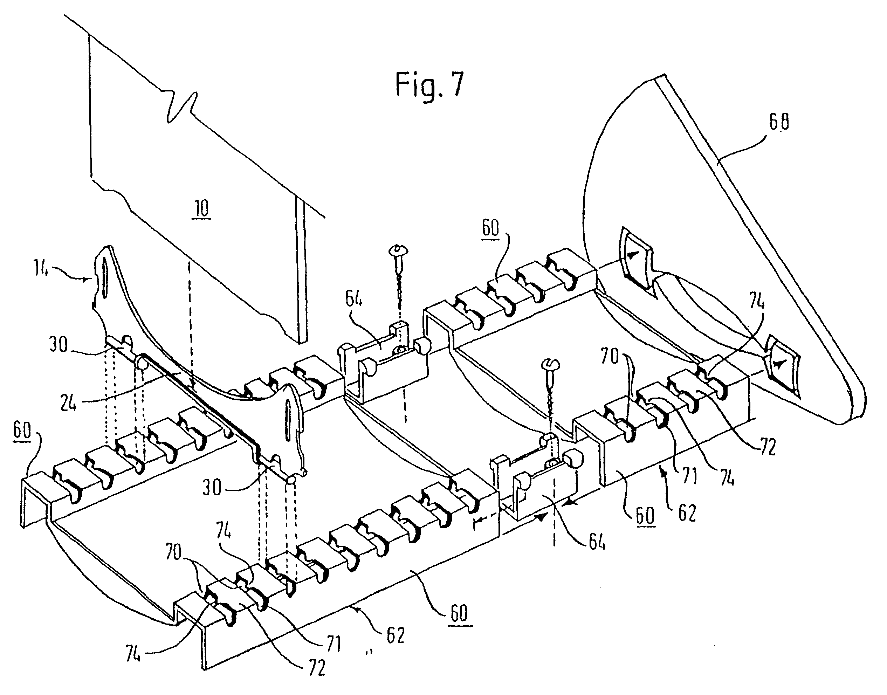

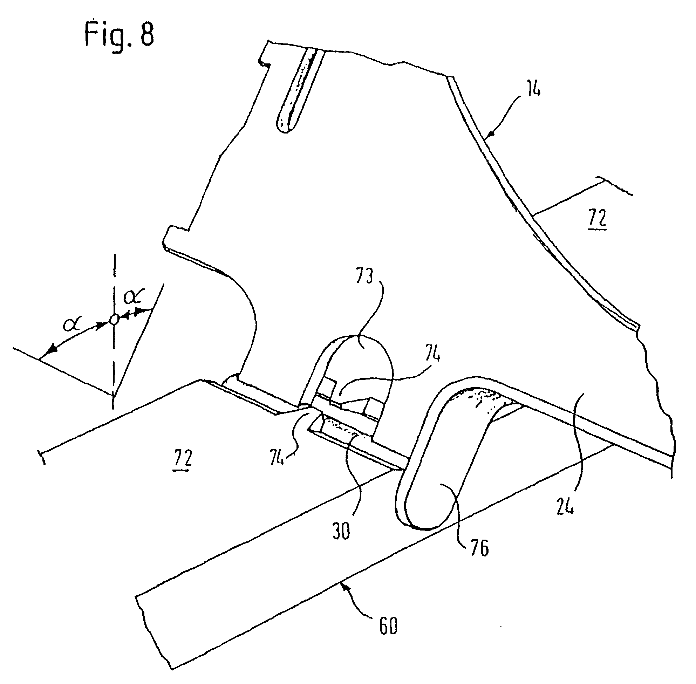

Die Fig. 7 und 8 zeigen jeweils eine Ausführungsform des erfindungsgemäßen Koppelorgans 14, das mit einem Schienensystem lösbar verbindbar ist. Es sind zwei parallel verlaufende sowie in einem der Breite des Koppelorgans 14 und des Flachgehäuses 10 entsprechenden Abstand voneinander angeordnete Schienen 60 vorgesehen, die durch mehrfaches Abwinkeln eines beispielsweise aus Blech hergestellten Trägerelementes 62 ausgebildet werden. Durch Verbindungselemente 64, die beispielsweise mit einem grundsätzlich beliebigen, nicht dargestellten Grundträger verschraubbar sind, können mehrere Trägerelemente 62 miteinander verbunden werden, um auf diese Weise eine beliebige Schienenlänge zu realisieren. In Fig. 7 ist des weiteren ein mit einer Stirnseite eines Trägerelementes 62 koppelbares Abschlußstück 68 erkennbar.

In den Schienen 60 ist eine Vielzahl von in regelmäßigen Abständen angeordneten und sich quer zur Schienenrichtung erstreckenden Aussparungen 70 ausgebildet, wodurch Zwischenstege 72 entstehen, an denen jeweils in eine der Aussparungen 70 ragende Haltenasen 74 ausgebildet sind.

Das Koppelorgan 14 der erfindungsgemäßen Speichervorrichtung ist an seinem Außenabschnitt 24 mit walzen- oder rollenförmigen Koppelelementen 30 versehen, deren Durchmesser derart bemessen sind, daß die Koppelelemente 30 durch elastisches Verformen der Haltenasen 74 in den Aussparungen 70 verrastet werden und sich in den mit Abrundungen 71 versehenen Aussparungen 70 drehen können. Folglich ist das Koppelorgan 14 im mit dem Schienensystem verrasteten Zustand innerhalb eines Winkelbereiches verschwenkbar, der insbesondere von der Ausgestaltung der Zwischenstege 72 und der Materialstärke des Außenabschnitts 24 abhängig ist.

Fig. 8 zeigt in einer vergrößerten Darstellung ein in eine Aussparung 70 gestecktes, eingerastetes Koppelelement 30 des Koppelorgans 14, wobei in der dargestellten Ausführungsform des Schienensystems jeder Zwischensteg 72 zwei jeweils ein Koppelelement 30 verriegelnd festhaltende Haltenasen 74 aufweist, die aufgrund von im Außenabschnitt 24 vorgesehenen Durchbrüchen 73 beim Verschwenken des Koppelorgans 14 nicht im Wege sind. Das Koppelorgan 14 ist in dem Ausführungsbeispiel gemäß Fig. 8 jeweils um einen Winkel α von etwa 40° zu beiden Seiten einer durch die gestrichelte Linie angedeuteten Vertikalen bezüglich der Längserstreckung der Schienen 60 verschwenkbar.

Anschlagzungen 76, die auf der Innenseite der Koppelelemente 30 ausgebildet sind, liegen im verrasteten Zustand an den Schienen 60 an und sorgen für eine definierte Lage des Koppelorgans 14 in Querrichtung bezüglich der Schienen 60.

Hinsichtlich der Verbindung des Koppelorgans 14 mit einem Träger kann das Koppelorgan 14 grundsätzlich beliebig und insbesondere entsprechend den vorstehend beschriebenen Ausführungsformen ausgebildet sein. Das Koppelorgan 14 kann somit grundsätzlich mit beliebig ausgestalteten Trägern lösbar verbindbar oder als integraler Bestandteil des jeweiligen Trägers ausgebildet sein.

## Patentansprüche

1. Vorrichtung zur Speicherung scheibenförmiger Datenträger (12), insbesondere vom CD- oder DVD-Typ, mit einem Flachgehäuse (10), das eine Schlitzöffnung (16) aufweist, über die ein Aufnahmeraum für den Datenträger (12) zugänglich ist, und einem Koppelorgan (14), das zur Halterung des Datenträgers (12) über die Schlitzöffnung (16) in das Flachgehäuse (10) einsteckbar und im eingesteckten Zustand mit dem Flachgehäuse (10) lösbar verbunden, insbesondere verrastet ist, **dadurch gekennzeichnet, daß** ein bei eingestecktem Koppelorgan (14) außerhalb des Flachgehäuses (10) angeordneter Außenabschnitt (24) des Koppelorgans (14) zur Verbindung mit einem Träger (42) ausgebildet ist.

2. Vorrichtung nach Anspruch 1,
**dadurch gekennzeichnet,**
**daß** das Koppelorgan (14) mit dem Träger (42) lösbar verbindbar ist.

3. Vorrichtung nach Anspruch 1 oder 2,
**dadurch gekennzeichnet,**
**daß** das Koppelorgan (14) einen mit einer etwa teilkreisförmigen Aussparung (26) versehenen Steckabschnitt (22) umfaßt, der im eingesteckten Zustand den Raum im Flachgehäuse (10) zwischen der Schlitzöffnung (16) und dem kreisförmigen Aufnahmeraum für den Datenträger (12) zumindest teilweise, bevorzugt im wesentlichen vollständig ausfüllt.

4. Vorrichtung nach zumindest einem der vorhergehenden Ansprüche,
**dadurch gekennzeichnet,**
**daß** wenigstens eine der an die Schlitzöffnung (16) angrenzenden Schmalseiten (28) des Flachgehäuses (10) mit vorsprungartigen Rastmitteln (36) für das Koppelorgan (14) versehen ist.

5. Vorrichtung nach zumindest einem der vorhergehenden Ansprüche,
**dadurch gekennzeichnet,**
**daß** wenigstens ein zwei Halbschalen des Flachgehäuses (10) miteinander verbindendes Verbindungselement als Rastmittel (36) ausgebildet ist.

6. Vorrichtung nach zumindest einem der vorhergehenden Ansprüche,
**dadurch gekennzeichnet,**
**daß** wenigstens ein Rastmittel des Koppelorgans (14) wenigstens einen insbesondere durch Rastmittel (36) des Flachgehäuses (10) elastisch verformbaren und zumindest eine insbesondere langlochförmige Aussparung (33) begrenzenden Materialsteg (32) umfaßt.

7. Vorrichtung nach Anspruch 6,
**dadurch gekennzeichnet,**
**daß** der Materialsteg (32) wenigstens einen Eingriffsabschnitt (34) umfaßt, der im eingesteckten Zustand an einer Schmalseite (28) des Flachgehäuses (10) ausgebildete Rastmittel (36) verriegelnd hintergreift.

8. Vorrichtung nach zumindest einem der vorhergehenden Ansprüche,
**dadurch gekennzeichnet,**
**daß** die Schlitzöffnung (16) des Flachgehäuses (10) bei eingestecktem Koppelorgan (14) zumindest im wesentlichen vollständig verschlossen ist.

9. Vorrichtung nach zumindest einem der vorhergehenden Ansprüche,
**dadurch gekennzeichnet,**
**daß** das Koppelorgan (14) wenigstens eine Stoßkante aufweist, die beim Einstecken in das Flachgehäuse (10) in Anschlag mit wenigstens einem die Schlitzöffnung (16) begrenzenden Randbereich oder mit wenigstens einem im Flachgehäuse (10) ausgebildeten Anschlagbereich bringbar ist.

10. Vorrichtung nach zumindest einem der vorhergehenden Ansprüche,
**dadurch gekennzeichnet,**
**daß** der Außenabschnitt (24) des Koppelorgans (14) wenigstens ein Koppelelement (30) aufweist, über welches das Koppelorgan (14) mit Trägern (42) insbesondere in Form von Klapphüllen, Außenverpakkungen, Gestängeanordnungen, Hängeregistraturen, Speicherracks, Displayeinheiten, Aufbewahrungsbehältnissen, Schienensystemen und/oder Stecksystemen insbesondere lösbar verbindbar ist.

11. Vorrichtung nach zumindest einem der vorhergehenden Ansprüche,
**dadurch gekennzeichnet,**
**daß** das Koppelorgan (14), insbesondere ein Koppelelement (30) des Koppelorgans (14), zur lösbaren Verbindung mit Aufbewahrungsvorrichtungen für Datenträger vom DVD-Typ, insbesondere mit an Schmalseiten (44) von DVD-Boxen (42) angeordneten Fixierelementen (50), ausgebildet ist

12. Vorrichtung nach zumindest einem der vorhergehenden Ansprüche,
**dadurch gekennzeichnet,**
**daß** der Außenabschnitt (24) des Koppelorgans (14) einstückig mit dem Träger (42) verbunden ist.

13. Vorrichtung nach zumindest einem der vorhergehenden Ansprüche,
**dadurch gekennzeichnet,**
**daß** das Koppelorgan (14) Bestandteil einer insbesondere aus Karton oder Pappe bestehenden Faltverpackung ist.

14. Vorrichtung nach zumindest einem der vorhergehenden Ansprüche,
**dadurch gekennzeichnet,**
**daß** das Koppelorgan (14) im mit einem Träger (42) verbundenen Zustand gegenüber dem Träger (42) verschwenkbar und insbesondere in eine ein einfaches Koppeln mit dem Flachgehäuse (10) ermöglichende Aufsteck- und Abziehstellung relativ zum Träger (42) vorgespannt ist.

15. Vorrichtung nach zumindest einem der vorhergehenden Ansprüche,
**dadurch gekennzeichnet,**
**daß** das Koppelorgan (14) aus einem wiederverwertbaren Material, insbesondere aus Kunststoff, bevorzugt Polypropylen, oder aus Karton oder Pappe, besteht.

16. Koppelorgan (14) zur Halterung scheibenförmiger Datenträger (12), insbesondere vom CD- oder DVD-Typ, für die in einem Flachgehäuse (10) ein Aufnahmeraum vorgesehen ist, der über eine Schlitzöffnung (16) des Flachgehäuses (10) zugänglich ist, wobei das Koppelorgan (14) über die Schlitzöffnung (16) in das Flachgehäuse (10) einsteckbar und im eingesteckten Zustand mit dem Flachgehäuse (10) lösbar verbunden, insbesondere verrastet ist, **dadurch gekennzeichnet, daß** ein bei eingestecktem Koppelorgan (14) außerhalb des Flachgehäuses (10) angeordneter Außenabschnitt (24) des Koppelorgans (14) zur Verbindung mit einem Träger (42) ausgebildet ist.

17. Koppelorgan nach Anspruch 16,
**gekennzeichnet durch**
die ein Koppelorgan betreffenden Merkmale zumindest eines der Ansprüche 2 bis 15.

## Claims

1. An apparatus for the storage of disk-shaped data storage media (12), in particular of the CD or DVD type, having a flat housing (10) that has a slot opening (16) via which a reception space for the data storage medium (12) is accessible, and a coupling member (14) that can be inserted into the flat housing (10) via the slot opening (16) to hold the data storage medium (12) and that is releasably connected, in particular latched, to the flat housing (10) in the inserted state, **characterized in that** an outer portion (24) of the coupling member (14), which is arranged outside the flat housing (10) when the coupling member (14) is inserted, is formed for the connection to a carrier (42).

2. An apparatus in accordance with claim 1, **characterized in that** the coupling member (14) can be releasably connected to the carrier (42).

3. An apparatus in accordance with claim 1 or claim 2, **characterized in that** the coupling member (14) comprises an insertable portion (22) provided with an approximately part circular-like cut-out (26) which, in the inserted state, fills up the space between the slot opening (16) and the circular reception space for the data storage medium (12) in the flat housing (10) at least in part, preferably substantially in full.

4. An apparatus in accordance with at least one of the preceding claims, **characterized in that** at least one of the narrow sides (28) of the flat housing (10) adjacent to the slot opening (16) is provided with projection-like latching means (36) for the coupling member (14).

5. An apparatus in accordance with at least one of the preceding claims, **characterized in that** at least one connecting element which connects two halves of the flat housing (10) to one another is formed as latching means (36).

6. An apparatus in accordance with at least one of the preceding claims, **characterized in that** at least one latching means of the coupling member (14) comprises at least one material web (32) which is elastically deformable, in particular by latching means (36) of the flat housing (10) and which bounds at least one cut-out (33) which is in particular in the shape of an elongate slot.

7. An apparatus in accordance with claim 6, **characterized in that** the material web (32) comprises at least one engaging section (34) which, in the inserted state, latchingly engages behind latching means (36) formed at a narrow side (23) of the flat housing (10).

8. An apparatus in accordance with at least one of the preceding claims, **characterized in that** the slot opening (16) of the flat housing (10) is at least substantially completely closed when the coupling member (14) is inserted.

9. An apparatus in accordance with at least one of the preceding claims, **characterized in that** the coupling member (14) has at least one abutment edge which can be brought into abutment with at least one edge region bounding the slot opening (16) or with at least one abutment region formed in the flat housing (10) on insertion into the flat housing (10).

10. An apparatus in accordance with at least one of the preceding claims, **characterized in that** the outer portion (24) of the coupling member (14) has at least one coupling element (30) via which the coupling member (14) can be connected, in particular releasably connected, to carriers (42), in particular in the form of flip covers, outer packagings, rod arrangements, hanging registers, storage racks, display units, storage containers, rail systems and/or plug systems.

11. An apparatus in accordance with at least one of the preceding claims, **characterized in that** the coupling member (14), in particular a coupling element (30) of the coupling member (14), is formed for the releasable connection to storage apparatuses for data storage media of the DVD type, in particular with fixing elements (50) arranged at narrow sides (44) of DVD boxes (42).

12. An apparatus in accordance with at least one of the preceding claims, **characterized in that** the outer portion of the coupling member (14) is connected in one piece to a carrier (42).

13. An apparatus in accordance with at least one of the preceding claims, **characterized in that** the coupling member (14) is a component of a folding packaging, in particular one consisting of cardboard or card.

14. An apparatus in accordance with at least one of the preceding claims, **characterized in that** the coupling member (14) - in the state connected to a carrier (42) - is pivotable with respect to the carrier (42) and is in particular biased relative to the carrier (42) in to an inserting and removing position which allows a simple coupling to the flat housing (10).

15. An apparatus in accordance with at least one of the preceding claims, **characterized in that** the coupling member (14) consists of a reusable material, in particular of plastic, preferably polypropylene, or of cardboard or card.

16. A coupling member (14) for holding disk-shaped data storage media (12), in particular of the CD or DVD type for which a reception space is provided in a flat housing (10), which reception space is accessible via a slot opening (16) of the flat housing (10), with the coupling member (14) being insertable into the flat housing (10) via the slot opening (16) and being releasably connected, in particular latched, to the flat housing (10) in the inserted state, **characterized in that** an outer portion (24) of the coupling member (14), which is arranged outside the flat housing (10) when the coupling member (14) is inserted, is formed for the connection to a carrier (42).

17. A coupling member in accordance with claim 16, **characterized by** the features relating to a coupling member of at least one of the claims 2 to 15.

## Revendications

1. Dispositif de stockage de supports de données (12) en forme de disque, en particulier du type CD ou DVD, comprenant un boîtier plat (10) qui comporte une ouverture en forme de fente (16) qui donne accès à un espace de réception du support de données (12), et un organe de couplage (14) qui peut être inséré dans le boîtier plat (10) à travers l'ouverture en forme de fente (16) pour retenir le support de données (12) et qui, à l'état inséré, est relié au boîtier plat (10) de façon séparable, en particulier par encliquetage, **caractérisé en ce que**, à l'état inséré de l'organe de couplage (14), une partie extérieure (24) de l'organe de couplage (14), disposée à l'extérieur du boîtier plat (10), est prévue pour être reliée à un support (42).

2. Dispositif suivant la revendication 1, **caractérisé en ce que** l'organe de couplage (14) peut être relié au support (42) de façon séparable.

3. Dispositif suivant la revendication 1 ou 2, **caractérisé en ce que** l'organe de couplage (14) comporte une partie d'insertion (22) pourvue d'un évidement (26) à peu près en forme d'arc de cercle et qui, à l'état inséré, remplit au moins partiellement, et de préférence sensiblement totalement, l'espace intérieur du boîtier plat (10) situé entre l'ouverture en forme de fente (16) et l'espace circulaire de réception du support de données (12).

4. Dispositif suivant l'une au moins des revendications précédentes, **caractérisé en ce qu'**au moins un petit côté (28) du boîtier plat (10) adjacent à l'ouverture en forme de fente (16) est pourvu de moyens d'encliquetage (10) en forme de saillies destinés à l'organe de couplage (14).

5. Dispositif suivant l'une au moins des revendications précédentes, **caractérisé en ce qu'**au moins un élément de liaison reliant entre elles deux demi-coques du boîtier plat (10) forme un moyen d'encliquetage (36).

6. Dispositif suivant l'une au moins des revendications précédentes, **caractérisé en ce qu'**au moins un moyen d'encliquetage de l'organe de couplage (14) comprend au moins une tige de matière (32) déformable élastiquement, notamment par un moyen d'encliquetage (36) du boîtier plat (10), cette tige de matière délimitant au moins une lumière (33) notamment en forme de trou allongé.

7. Dispositif suivant la revendication 6, **caractérisé en ce que** la tige de matière (32) comprend au moins une partie d'attaque (34) qui, à l'état inséré, vient se verrouiller derrière un moyen d'encliquetage (36) prévu sur un petit côté (28) du boîtier plat (10).

8. Dispositif suivant l'une au moins des revendications précédentes, **caractérisé en ce que**, à l'état inséré de l'organe de couplage (14), l'ouverture en forme de fente (16) du boîtier plat (10) est obturé au moins sensiblement totalement.

9. Dispositif suivant l'une au moins des revendications précédentes, **caractérisé en ce que** l'organe de couplage (14) comporte au moins un bord de butée, qui, à l'état inséré dans le boîtier plat (10), vient en butée avec au moins une région marginale qui délimite l'ouverture en forme de fente (16) ou avec au moins une région de butée prévue dans le boîtier plat (10).

10. Dispositif suivant l'une au moins des revendications précédentes, **caractérisé en ce que** la partie extérieure (24) de l'organe de couplage (14) comporte au moins un élément de couplage (30) par lequel l'organe de couplage (14) peut être relié, en particulier de façon séparable, à des supports (42) notamment en forme de pochettes à rabat, d'emballages extérieurs, de dispositifs à tiges, d'armoires de rangement à suspension, de râteliers de rangement, d'unités de présentation, de récipients de conservation, de systèmes à rails et/ou de systèmes à enfichage.

11. Dispositif suivant l'une au moins des revendications précédentes, **caractérisé en ce que** l'organe de couplage (14), en particulier un élément de couplage (30) de l'organe de couplage (14), est prévu pour une liaison séparable avec des dispositifs de conservation de supports de données du type DVD, en particulier avec des éléments de fixation disposés sur des petits côtés (44) de boîtes pour DVD (42).

12. Dispositif suivant l'une au moins des revendications précédentes, **caractérisé en ce.que** la partie extérieure (24) de l'organe de couplage (14) est reliée d'une seule pièce au support (42).

13. Dispositif suivant l'une au moins des revendications précédentes, **caractérisé en ce que** l'organe de couplage fait partie d'un emballage repliable, constitué notamment de carton.

14. Dispositif suivant l'une au moins des revendications précédentes, **caractérisé en ce que** l'organe de couplage (14), dans l'état relié à un support (42), est basculant par rapport au support (42) et, notamment, est précontraint dans une position d'insertion et d'extraction par rapport au support (42) permettant un accouplement simple avec le boîtier plat (10).

15. Dispositif suivant l'une au moins des revendications précédentes, **caractérisé en ce que** l'organe de couplage (14) est constitué d'une matière recyclable, en particulier de matière plastique, de préférence de polypropylène, ou de carton.

16. Organe de couplage (14) destiné à maintenir des supports de données (12) en forme de disque, en particulier du type CD ou DVD, pour lesquels un espace de réception est prévu dans un boîtier plat (10), cet espace étant accessible à travers une ouverture en forme de fente (16) du boîtier plat (10), l'organe de couplage (14) pouvant être inséré dans le boîtier plat (10) par l'intermédiaire de l'ouverture en forme de fente (16) et, à l'état inséré, étant relié de façon séparable au boîtier plat (10), en particulier par encliquetage, **caractérisé en ce que**, à l'état inséré de l'organe de couplage (14), une partie extérieure (24) de l'organe de couplage (14), disposée à l'extérieur du boîtier plat (10). est prévue pour être reliée à un support (42).

17. Organe de couplage suivant la revendication 16, **caractérisé par** les caractéristiques relatives à un organe de couplage de l'une au moins des revendications 2 à 15.
